# EUROPEAN PATENT SPECIFICATION

(11) **EP 1 795 342 B1**
(45) Date of publication and mention of the grant of the patent: **28.12.2016**
(21) Application number: 04788363.2
(22) Date of filing: 30.09.2004
(51) Int. Cl.: B32B 27/00

(54) **MULTILAYER RESIN FILM AND METHOD FOR PRODUCING MULTILAYER RESIN FILM**
MEHRLAGIGE HARZFOLIE UND VERFAHREN ZUR HERSTELLUNG EINER MEHRLAGIGEN HARZFOLIE
FILM DE RÉSINE MULTICOUCHE ET PROCÉDÉ DE FABRICATION D' UN FILM DE RÉSINE MULTICOUCHE

(43) Date of publication of application: 13.06.2007
(73) Proprietor: Toyo Kohan Co., Ltd., Tokyo 102-8447 (JP)
(72) Inventor: MATSUBARA, Yasuhiro,c/o TOYO KOHAN CO., LTD., Kudamatsu-shi, Yamaguchi 744-8611 (JP); MAIDA, Norimasa,c/oTOYO KOHAN CO., LTD., Kudamatsu-shi, Yamaguchi 744-8611 (JP); NAKAMURA, Takuji,c/oTOYO KOHAN CO., LTD., Kudamatsu-shi, Yamaguchi 744-8611 (JP); INAZAWA, Hiroshi,c/oTOYO KOHAN CO., LTD., Kudamatsu-shi, Yamaguchi 744-8611 (JP)
(74) Representative: Vossius & Partner Patentanwälte Rechtsanwälte mbB
(86) International application number: PCT/JP2004/014335
(87) International publication number: WO 2006/038252

(56) References cited:
- EP-A1- 1 097 809
- EP-A1- 1 449 646
- EP-A1- 1 449 884
- EP-A2- 1 270 201
- WO-A1-00/46026
- JP-A- 10 086 308
- JP-A- 11 309 770
- JP-A- 2000 071 388
- JP-A- 2003 136 635
- JP-A- 2004 299 390
- KEIJI SAWADA: '1st edition, Kabushiki kaisha Raba Daijesuto Sha Hakko', 25 June 1993 article 'Plastic Oshidashi Seikei no Saishin Gijutsu', pages 121 - 124, XP002989343

## Description

### Technical Field

The present invention relates to a multilayer film comprising a plurality of resin layers having melt viscosities at the same heating temperature being different from one another and being reduced in the irregularity of the surface thereof, and to a method for producing the same.

### Background Art

In such field as beverage cans, cans prepared by applying drawing process or drawing and ironing process to a resin film-covered metal plate are in heavy usage. This is due to the fact that a resin film has both of excellent adhesiveness to a metal plate at the process and excellent permeation resistant properties for the content. In these cans prepared by the forming process of a resin film-covered metal plate, in these years, along with the diversification of a content charged in a can, and the upgrade of a processing degree for further weight saving of a can body for the purpose of reduction in can cost, it has become difficult to satisfy both of excellent permeation resistant properties and excellent work-bonding properties by using a single layer resin film. Therefore, it has been tried to use single layer resin films excellent in work-bonding properties and permeation resistant properties, respectively, thereby making them bear these properties independently, and to form a multilayered film of these individual single layer films; and to apply the multilayered film as a resin film for use in covering a metal plate to give a resin film-covered metal plate having more excellent work-bonding properties and permeation resistant properties as compared conventional ones.

However, when resin films having physical properties being different from one another are used in a multilayered film as described above, resins having melting points being different from one another and melt viscosities being different from one another when they are heated to melt at the same temperature must be heated to melt, and co-extruded to from a film. However, in the case where resins having melting points being different from one another are heated to melt, when they are heated to melt at the same temperature, in many cases, resin having a higher melting temperature results in a higher melt viscosity, and resin having a lower melting temperature results in a lower melt viscosity. And, in the case where such resins are heated to melt at the same temperature using a multi-manifold die to laminate these into a multilayer, if adj acent resins have melt viscosities being different from each other, when merging individual heated and molten resin having been passed through an individual manifold into a multilayer resin, disorder occurs in the flow of the heated and molten resin at the interface of resins, which may result in the occurrence of thickness unevenness (irregularities) on the film surface. The thickness unevenness occurring on the film surface is referred to as a flow mark, which is not only defective visually, but, as well, makes uniform process impossible upon conducting drawing process or drawing and ironing process for forming it into a can body, or the neck in (diameter reduction) process of the opening at the can upper portion, to cause can body breakage. In order to inhibit the occurrence of such thickness unevenness (irregularities, flow mark), various methods disclosed in official gazettes have been tried.

For example, there is disclosed such method as inhibiting the occurrence of a flow mark by selecting and using resins having small difference mutually in melting points or viscosities at heating to melt (for example, refer to Patent Document 1: JP-A-08-290532). However, depending on physical properties required for a resin film, there are many cases where resins having large difference mutually in melting points or viscosities at heating to melt must be selected, and thus, the method disclosed in the official gazette can be applied only to limited applications.

There is also disclosed such method that, in a multilayer extrusion-forming method in which a feed block method for merging a plurality of heated and molten resins before a T-die is used and the feed block and a T-die for forming a multilayer resin film connected with the feed block are combined, reduces such defective phenomenon as declination (flow mark) in the laminated boundary face emerging into a multilayer by temperature control of a heater provided to the feed block (for example, refer to Patent Document 2: JP-A-11-309770). In Fig. 2, the outline of one of a multilayer extrusion-forming apparatus is shown.

The multilayer extrusion-forming apparatus is constituted of a feed block 10 having a plurality of manifolds 14a-14g, and a T-die 12 provided below a combining portion 16 of resins from the manifolds 14a-14g provided connected to the feed block 10. By providing heaters 20b, 22b, a thermometer 28b etc. around the combining portion of respective resin channels from manifolds 14a-14g, for example, to the resin channel of the exit side of the manifold 14b (for the purpose of simple description, referred only to the manifold 14b), and controlling the temperature/viscosity of respective molten resin materials supplied from respective manifolds to uniformize the temperature/viscosity, the defective phenomenon at the laminated boundary face merging into the multilayer resin is reduced.

However, in the feed block method, since the inside of the T-die into which resins flow after the merging into a multilayer has a single layer structure, the distance from the merging portion 16 of the merged and multilayered resin to an exit opening 34 of a die lip 32 becomes large, and, during the transfer of the molten resin between the distance, the T-die is heated only as a whole, it is impossible to keep heating temperatures of respective resin layers at just after the merging being different from one another for the purpose of giving the same viscosity to respective resin layers while allowing the temperature difference to remain. Therefore, at the exit opening 3, melting viscosities of respective resin layers can not be kept the same caused by alteration of the heating temperature of respective resin layers, and it becomes difficult to inhibit the occurrence of the flow mark. Thus, the method according to this official gazette also can be applied only to such limited application that resins, in which the difference in melting points giving the same melt viscosity is not so large, are used.

JP-A-2003-136635 describes a laminated structure and phase difference film, wherein the laminated structure is characterized in that a layer composed of an ethylene-(meth) acrylic ester copolymer with a melt flow rate of 1 g/10 min or less as measured at a temperature of 190°C and a load of 21.18N, is sandwiched between a layer formed of a polymer having an alicyclic structure and a layer formed of at least one kind of thermoplastic resin selected from among a vinyl aromatic polymer, polyolefin, polyamide, polyester and polycarbonate.

Further background information relating to the present invention can be found in JP-A-2000-71388, JP-A-10-86308, JP-A-11-309770, JP-A-2004-299390, EP-A-1449646, EP-A-1449884, EP-A-1270201, EP-A-1097809, WO-A-00/46026, and the publication of K. Sawada, "Plastic Oshidashi Seikei no Saishin Gijutsu", 1st edition, Kabushiki kaisha Raba Daijesuto Sha Hakko, 25 June, 1993.

### Disclosure of the Invention

### Problems that the Invention is to Solve

The present invention aims to provide a multilayer film comprising a plurality of resin layers having melt viscosities at the same heating temperature being different from one another, wherein it is a multilayer resin film which is reduced in the irregularity of the surface thereof; and a method for producing a multilayer resin film comprising the step of laminating a plurality of resins having melt viscosities at the same heating temperature being different from one another, without the formation of irregularities on the surface of the film.

### Means for Solving the Problems

The present invention provides a method for producing a multilayer film as defined by claim 1.

A multilayer resin film may be a multilayer resin film formed by laminating a plurality of resin layers having melt viscosities at the same heating to melt temperature being different from one another, wherein the difference of the melt viscosities of adjacent resin layers at the same heating temperature is 3000-20000 poise at a shear rate of 20-500 sec⁻¹, and the difference of irregularities on the surface of the multilayer resin film is 5 µm or less.

The method for producing a multilayer resin film according to the invention is a method for producing a multilayer resin film formed by laminating a plurality of polyester resins having melt viscosities at the same heating and melting temperature being different from one another using a multi-manifold die, the method comprising the step of, after controlling the respective temperatures of an extruder provided in succession to a manifold, the manifold, and a die adjacent to the manifold, through which the above plural resins are passed, in such a manner that the difference of the melt viscosities of adjacent resin layers is 3000 poise or less at a shear rate of 20-500 sec⁻¹, laminating the respective molten resins to form a film, wherein the difference of the irregularities on the surface of the multilayer resin film is 5 µm or less. The temperatures of the extruder, the manifold and the manifold die, through which a resin having a larger melt viscosity at one heating and melting temperature is passed, may be controlled to be higher than the temperature of the extruder, the manifold and the manifold die through which a resin having a smaller melt viscosity of the molten resin at the same heating and melting temperature is passed.

"The same heating and melting temperature" in the present Description means a temperature in a range from the melting temperature or more to below the degradation temperature of a resin having the lowest melting point among resins constituting the multilayer resin film.

### Brief Description of the Drawings

[Fig. 1] Fig. 1 is an outline drawing that shows one example of the method for producing a multilayer film of the present invention.

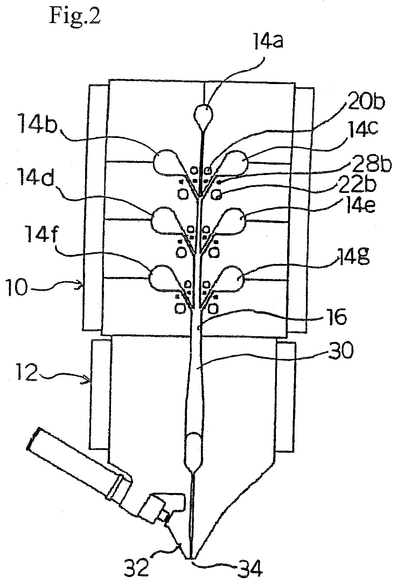

[Fig. 2] Fig. 2 is an outline drawing that shows one example of a method for producing a conventional multilayer film.

As to the reference letters in the drawings, 1 represents a multi-manifold die, each of 2a and 2b represents a manifold, each of 3a, 3b, 4a and 4b represents a heater, 5 represents a lip land, each of 6a and 6b represents an extruder, 7 represents a discharge port, 8 represents a multilayer resin film, 9 represents a cooling roll, 12 represents a winding means, each of 10a, 10b, 11a and 11b represents a heater, 12 represents a winding means, each of 14a, 14b, 14c, 14d, 14e, 14f, 14g represents a manifold, 16 represents a merging portion, each of 20b and 22b represent a heater, 28 represents a thermometer, 32 represents a die lip, and 34 represents an exit opening.

### Best Mode for Carrying Out the Invention

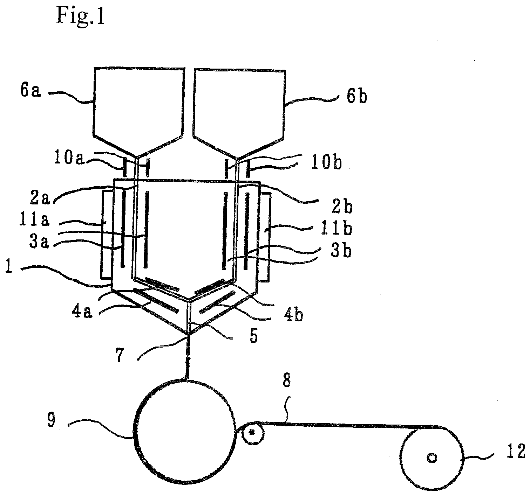

Hereinafter, the present invention will be described while referring to the drawings. Fig. 1 is an outline drawing that shows one example of a method for producing the multilayer film of the invention composed of a plurality of resin layers having melt viscosities at the same heating temperature being different from one another. For the purpose of simplifying the description, an instance of applying the method to form a two-layer resin film is exemplified. A multi-manifold die 1 having two manifolds 2a and 2b is provided with an extruder 6a for heating, melting and extruding a resin having a higher melt viscosity at one heating temperature and an extruder 6b for heating, melting and extruding a resin having a lower melt viscosity at the same temperature, connected with the two manifolds 2a and 2b via respective resin channels. The manifolds 2a and 2b are united on the lower side of the multi-manifold die 1 to form a lip land 5, which is connected to a discharge port 7 provided to the die lip at the lower most portion of the multi-manifold die 1.

The multi-manifold die 1 is provided with a heater 11a for heating the side of the die main body through which the resin having a higher melt viscosity is passed and a heater 11b for heating the side through which the resin having a lower melt viscosity is passed, heaters 3a and 3b for heating the manifolds 2a and 2b provided adjacent to the respective manifolds, and heaters 4a and 4b, and in addition, with heaters 10a and 10b for heating resin channels that connect an extruder 6a and extruder 6b with the multi-manifolds 2a and 2b, respectively. Near regions provided with these respective heaters, a not shown temperature-measuring means such as a thermo couple are provided to measure the temperature of respective regions, and the temperature of the respective heaters are controlled independently in such a manner that the difference of viscosities of the respective heated and melted resins in the manifolds 2a and 2b lies in a predetermined range by controlling the heating temperature to be constant.

The two types of resins having viscosities at the same temperature being different from each other that have been heated to melt in the extruders 6a and extruder 6b are passed through the manifolds 2a and 2b provided in the multi-manifold die 1, respectively, and formed into a laminate at the inlet port of the lip land 5 merged on the lower side of the multi-manifold die 1, which is discharged from a discharge port 7 provided to the die lip at the lowermost portion of the die 1 onto a cooling roll 9 having such constitution that a cooling medium such as water circulates the inside thereof provided below the discharge port 7 to form a cooled and solidified multilayer resin film 8, and wound on such winding means 12 as a coiler that winds the film continuously in a coil shape.

With the use of the apparatus thus constituted for producing a multilayer resin film, the multilayer resin film of the invention can be formed as follows. Respective pellets of resins having melt viscosities at the same heating and melting temperature being different from one another (two types in the case of Fig. 1) are heated to melt in the extruders 6a and 6b, which are guided to the manifolds 2a and 2b provided on the lower side of respective extruders connected via respective resin channels in the multi-manifold die 1 and proceed to the merging portion. At this time, for the respective resins, the heating temperatures are controlled with the heaters 10a and 10b, heaters 11a and 11b, heaters 3a and 3b, and heaters 4a and 4b in such a manner that the difference of the melting viscosities of respective resins is 3000 poise or less at a shear rate of 20-500 sec⁻¹ while measuring the temperatures with a temperature-measuring means such as a thermo couple provided near the respective heaters.

Next, the molten resins that are allowed to have the difference of the respective melt viscosities of 3000 poise or less at a shear rate of 20-500 sec⁻¹ as described above are formed into a laminate at the inlet of the lip land 5 merged at the merging portion of the manifolds 2a and 2b, which is discharged from the discharge port 7 onto the cooling roll 9 and solidified to be a multilayer film 8, and wound with the winding means 12. In this way, the multilayer resin film of the invention is produced.

The multilayer resin film of the invention obtained as described above has the difference of the irregularities of preferably 5 µm or less, more preferably 2 µm or less on the surface of the multilayer resin film. The difference of the irregularities of more than 5 µm is not only defective visually, but, as well, after forming a multilayer resin film-covered metal plate by laminating the multilayer resin film on a metal plate, when the multilayer resin film-covered metal plate is subjected to drawing process or drawing and ironing process for forming the same into a can body, or to neck in process of the opening of the can upside, the resin film breaks away from the metal plate, or, since processing degree varies locally, there occurs can body breakage in the drawing process or drawing and ironing process, or crash in the neck in process, thereby making it impossible to process the plate into a can body.

In addition, as to the multilayer resin film of the invention, with the use of the above-described method for producing the multilayer resin film, it is also possible to form a multilayer resin film-covered metal plate by directly laminating the heated and melted multilayer resin discharged in a film shape from the discharge portion of the die lip onto a metal plate. Further, it is also possible to form a multilayer resin film-covered metal plate by laminating the multilayer resin film produced by using the method for producing the multilayer resin film on a metal plate directly or via an adhesive agent using a publicly known lamination method. Incidentally, when a heated and melted multilayer resin is discharged directly onto a metal plate in a film shape to laminate the film, the difference of the irregularities on the surface of the multilayer resin film after the lamination is preferably 5 µm or less, more preferably 2 µm or less from the same reason as described above.

In the above description, the instance, in which a two-layer resin film is formed while using two types of resins, is described. But, needless to say, it is also possible to form a resin film of three or more layers by providing a multi-manifold die provided with three or more manifolds and three or more extruders connected to respective manifolds.

### Examples

Hereinafter, the present invention is described in detail while showing Examples.

### <Preparation of Film for Test>

### (Sample No. 1)

There were prepared polyester resin A (polyethylene isophthalate (ethylene isophthalate: 5% by mole), melting point: 230°C, intrinsic viscosity: 0.92, melt viscosity at 270°C: 8000 poise, shear rate: 100 sec⁻¹) (hereinafter, abbreviated to resinA) being excellent inpermeation resistant properties, and polyester resin B (ethylene terephthalate/ethylene isophthalate copolymer (ethylene isophthalate 15% by mole), melting point: 215°C, intrinsic viscosity: 0. 9, melt viscosity at 270°C: 7000 poise, shear rate: 100 sec⁻¹) (hereinafter, abbreviated to resin B) being excellent in work-bonding properties, and both of the resin A and the resin B were heated to melt at 270°C using extruders respectively. Next, to each of manifolds of a multi-manifold die having two manifold connected to two extruders via a resin channel and being provided with heaters for controlling the temperature independently adjacent to the manifolds, the molten resin A and molten resin B were guided in such a manner that the ratio of the thickness of resin A and the thickness of resin B was 1:3, and the thickness of a two-layer resin film was 25 µm after they were formed into a two-layer film. The side of the multi-manifold die through which the molten resin A was passed, the resin channel and manifold through which the molten resin A was passed, the side of the multi-manifold die through which the molten resin B was passed, and the resin channel and manifold through which the molten resin B was passed were heated previously at 260°C with the heater adjacent to each of those, and the molten resin A and the molten resin B were passed through respective manifolds. After heating the molten resin A and the molten resin B in that way, the molten resin A and the molten resin B were merged at the merging portion of the manifold to form a laminate, which was discharged from a discharge port as a two-layer resin through from the merging point of the manifold to the lip land, fallen onto a cooling roll inside which was circulated water provided below the discharge port to be cooled and solidified, and wound on a coiler as a two-layer resin filmhaving a width of approximately 1 m, which was designated as Sample Number 1.

### (Sample Number 2)

There were prepared resinAbeing the same as in the Sample Number 1, and polyester resin (ethylene terephthalate/ethylene isophthalate copolymer (ethylene isophthalate 15% by mole), melting point: 215°C, intrinsic viscosity: 0.75, melt viscosity at 270°C: 2000 poise, shear rate: 100 sec⁻¹) (hereinafter, abbreviated to resin C) being excellent in work-bonding properties, and both of the resin A and the resin C were heated to melt at 270°C using extruders respectively. Next, to each of two manifolds of the multi-manifold die the same as one used for preparing the sample of Sample Number 1, molten resin A and molten resin C were guided in such a manner that the ratio of the thickness of resin A and the thickness of resin C was 1:3, and the thickness of a two-layer resin film was 25 µm after they were formed into a two-layer film. The side of the multi-manifold die through which the molten resin A was passed, the resin channel and manifold through which the molten resin A was passed, the side of the multi-manifold die through which the molten resin C was passed, and the resin channel and manifold through which the molten resin C was passed were heated previously at 260°C with the heater adjacent to each of those, and the molten resin A and the molten resin C were passed through respective manifolds. After heating the molten resin A and the molten resin C in that way, the molten resin A and the molten resin C were merged at the merging portion of the manifold to form a laminate, which was discharged from a discharge port as a two-layer resin through from the merging point of the manifold to the lip land, fallen onto a cooling roll inside which was circulated water provided below the discharge port to be cooled and solidified, and wound on a coiler as a two-layer resin film having a width of approximately 1 m, which was designated as Sample Number 2.

### (Sample Number 3)

The same resin A and resin C as used in the Sample Number 2 were heated to melt at 280°C for the resin A and at 260°C for the resin C using extruders respectively. Next, to each of manifolds of a multi-manifold die having two manifold connected to two extruders via a resin channel and being provided with heaters for controlling the temperature independently adjacent to the manifold, the molten resin A and molten resin C were guided in such a manner that the ratio of the thickness of resin A and the thickness of resin C was 1:3, and the thickness of a two-layer resin film was 25 µm after they were formed into a two-layer film. The side of the multi-manifold die through which the molten resin A was passed, and the resin channel and manifold through which the molten resin A was passed were heated previously at 280°C with the heater adjacent to each of those, and the side of the multi-manifold die through which the molten resin C was passed, and the resin channel and manifold through which the molten resin C was passed were heated previously at 250°C with the heater adjacent to each of those, and the molten resin A and the molten resin C were passed through respective manifolds. Here, the melt viscosity of the resin A at 280°C and the shear rate of 100 sec⁻¹ is 6000 poise, and the melt viscosity of the resin C at 250°C and the shear rate of 100 sec⁻¹ is 3500 poise. After heating independently the molten resin A and the molten resin C in that way, the molten resin A and the molten resin C were merged at the merging portion of the manifold to form a laminate, which was discharged from a discharge port as a two-layer resin through from the merging point of the manifold to the lip land, fallen onto a cooling roll inside which was circulated water provided below the discharge port to be cooled and solidified, and wound on a coiler as a two-layer resin film having a width of approximately 1 m, which was designated as Sample Number 3.

### <Property Evaluation>

The properties of the resin films of Sample Numbers 1-3 prepared as described above were evaluated as follows.

### <Thickness Unevenness>

For each of resin films of Sample Numbers 1-3, the thickness in the whole width direction (about 1 m) was measured continuously every 1 m (16 portions) starting from 15 m in the longitudinal direction of the resin film at five minutes after starting the film formation, and the difference of the maximum thickness and the minimum thickness among the whole values measured for the whole width direction at 16 portions in the longitudinal direction was obtained as the thickness unevenness.

### <Peel Resistance of Resin Layer for Metal Plate>

An aluminum alloy plate having been subjected to phosphoric acid chromate treatment was heated at 240°C, on one side of which was abutted the two-layer resin film of Sample Numbers 1-3 in such a manner that the resin film B or the resin film C was contacted with the plate, and then pressured with a pressure roll for thermal adhesion to form a resin-covered aluminum alloy plate. Subsequently, these resin-covered aluminum alloy plate were rolled at a rolling ratio of 50% and heated at 220°C. Then, a cross-like cut was given with a cutter knife in the resin-coated surface so as to reach the aluminum alloy plate, then whether the two-layer resin films of Sample Numbers 1-3 were peeled or not was observed visually, and peel resistance was evaluated on the basis of the following standard.
O: No peeling is observed
x: Peeling is observed
The evaluation results are shown in Table 1.

**[Table 1]**

| Sample Number | Property evaluation | | Classification |
|---|---|---|---|
| | Thickness unevenness (µm) | Peel resistance | |
| 1 | 2.0 | x | Comparative Example |
| 2 | 6.1 | O | Comparative Example |
| 3 | 1.8 | O | Present Invention |

As shown in Table 1, the multilayer resin film of the invention, which was formed from a plurality of resins having melt viscosities at the same heating and melting temperature being different from each other while using a multi-manifold die and controlling the heating temperatures of respective manifolds to keep the difference of the melt viscosities in a certain range, had a extremely small thickness unevenness, and, when the resin film was bruised in a state of being laminated on a metal plate, no resin film was peeled off the metal plate.

### Industrial Applicability

In the present invention, upon forming a multilayer resin film by laminating a plurality of resins having melt viscosities at the same heating and melting temperature being different from one another, the resins are molten using a multi-manifold die, wherein respective temperatures of an extruder provided connected to a manifold, the manifold, and a die adj acent to the manifold through which the above plurality of resins are passed are controlled in such a manner that the difference of the melt viscosities of adjacent resin layers at the respective heating and melting temperatures becomes 3000 poise or less, and then the respective molten resins are laminated to form a multilayer film. The multilayer film thus obtained has the difference of irregularities of 5 µm or less on the surface, therefore, the multilayer resin film is not only excellent in visual smoothness, but, as well, when it is laminated on a metal plate to form a multilayer resin film-covered metal plate, and then the metal plate is subj ected to drawing process or drawing and ironing process to be formed into a can body or to neck in process of the opening of the can upper portion, no resin film is peeled off the metal plate, and, in addition, since there is no portion in which processing degree is different locally, no can body breakage in drawing process or drawing and ironing process or no crush in neck in process occurs, to allow the multi resin film-covered metal plate to be formed stably into a can body.

## Claims

1. A method for producing a multilayer resin film wherein a multilayer resin film is formed by laminating a plurality of polyester resins having melt viscosities at the same heating and melting temperature being different from one another while using a multi-manifold die, the method comprising the step of, after controlling the respective temperatures of an extruder provided in succession to a manifold, the manifold and a die adjacent to the manifold through which the above plurality of polyester resins are passed in such a manner the difference of the melt viscosities of adjacent resin layers is 3000 poise or less at a shear rate of 20-500 sec-1, laminating the respective molten resins to form a multilayer film, wherein the difference of the irregularities on the surface of the multilayer resin film is 5 µm or less.

2. The method for producing a multilayer resin film according to claim 1, wherein the temperature of the extruder, the manifold and the die adjacent to the manifold through which a resin having a larger melt viscosity at one heating and melting temperature is passed is controlled to be a higher temperature than the temperature of the extruder, the manifold and the die adjacent to the manifold through which a resin having a smaller melt viscosity is passed at the same heating and melting temperature.

## Patentansprüche

1. Verfahren zur Herstellung einer Mehrschichtharzfolie, wobei eine Mehrschichtharzfolie durch Laminieren mehrerer Polyesterharze, die Schmelzviskositäten bei gleicher Erwärmungs- und Schmelztemperatur haben, die sich voneinander unterscheiden, unter Verwendung einer Mehrkanaldüse gebildet wird, wobei das Verfahren den Schritt aufweist: nach Steuern der jeweiligen Temperaturen eines im Anschluss an einen Verzweiger vorgesehenen Extruders, des Verzweigers und einer zum Verzweiger benachbarten Düse, durch die die mehreren Polyesterharze geführt werden, so dass die Differenz der Schmelzviskositäten benachbarter Harzschichten höchstens 3000 Poise bei einer Schergeschwindigkeit von 20 bis 500 s⁻¹ beträgt, Laminieren der jeweiligen geschmolzenen Harze, um eine Mehrschichtfolie zu bilden, wobei die Differenz der Unregelmäßigkeiten auf der Oberfläche der Mehrschichtharzfolie höchstens 5 µm beträgt.

2. Verfahren zur Herstellung einer Mehrschichtharzfolie nach Anspruch 1, wobei die Temperatur des Extruders, des Verzweigers und der zum Verzweiger benachbarten Düse, durch die ein Harz mit einer größeren Schmelzviskosität bei einer Erwärmungs- und Schmelztemperatur geführt wird, so gesteuert wird, dass sie eine höhere Temperatur als die Temperatur des Extruders, des Verzweigers und der zum Verzweiger benachbarten Düse hat, durch die ein Harz mit einer kleineren Schmelzviskosität bei gleicher Erwärmungs- und Schmelztemperatur geführt wird.

## Revendications

1. Procédé de production d'un film de résine multicouche dans lequel un film de résine multicouche est formé par la stratification d'une pluralité de résines de polyester présentant des viscosités à l'état fondu à la même température de chauffage et de fusion qui sont différentes les unes des autres tout en utilisant une filière à plusieurs distributeurs, le procédé comprenant l'étape, après la régulation des températures respectives d'une machine d'extrusion fournies successivement jusqu'à un distributeur, du distributeur et d'une filière adjacente au distributeur à travers laquelle la pluralité susmentionnée de résines de polyester est passée de telle manière que la différence des viscosités à l'état fondu des couches de résine adjacentes soit de 3000 poises ou moins à une vitesse de cisaillement de 20 à 500 sec⁻¹, de stratification des résines fondues respectives pour former un film multicouche, dans lequel la différence des irrégularités sur la surface du film de résine multicouche est de 5 µm ou moins.

2. Procédé de production d'un film de résine multicouche selon la revendication 1, dans lequel la température de la machine d'extrusion, du distributeur et de la filière adjacente au distributeur à travers laquelle une résine présentant une viscosité à l'état fondu plus élevé à une température de chauffage et de fusion est régulée de façon à être une température plus élevée que la température de la machine d'extrusion, du distributeur et de la filière adjacente au distributeur à travers laquelle une résine présentant une viscosité à l'état fondu plus basse à la même température de chauffage et de fusion.
